# EUROPÄISCHE PATENTANMELDUNG

(11) **EP 4 438 238 A1**
(43) Veröffentlichungstag der Anmeldung: **02.10.2024**
(21) Anmeldenummer: 24161523.6
(22) Anmeldetag: 05.03.2024
(51) Int. Cl.: B25H 7/00

(54) **MONTAGESCHABLONE UND MONTAGEVERFAHREN**

(30) Priorität: 14.03.2023 DE 102023106257
(71) Anmelder: Hugendubel, Malte, 42115 Wuppertal (DE)
(72) Erfinder: Hugendubel, Malte, 42115 Wuppertal (DE)
(74) Vertreter: König Szynka Tilmann von Renesse Patentanwälte Partnerschaft mbB München

(57) **Zusammenfassung**

Die Erfindung betrifft ein Verfahren zum Montieren einer technischen Vorrichtung an einer Fläche mittels einer Schablone, welche Montageinformationen enthält, wobei das Verfahren die Schritte aufweist:
- Anbringen der Schablone auf der Fläche und
- Montieren der technischen Vorrichtung an der Fläche, während die Schablone daran angebracht ist,
- Abnehmen der Schablone von der Fläche nach der Montage,
dadurch gekennzeichnet, dass die technische Vorrichtung ein System aus einer Mehrzahl zusammenwirkender Geräte und zugehörigen Leitungen dazwischen ist.

## Beschreibung

Die vorliegende Erfindung betrifft die Montage einer technischen Vorrichtung an einer Fläche mittels einer hierzu ausgelegten Schablone und diese Schablone selbst.

Bei der Montage technischer Vorrichtungen an Flächen, z. B. Wänden, kommt es auf die richtige Positionierung der Vorrichtung oder von Vorrichtungsteilen und gegebenenfalls auch auf die richtige Positionierung separat anzubringender Montagemittel relativ zueinander und/oder relativ zu der Fläche (z. B. zu Rändern einer Wand oder zu schon an der Fläche vorgesehenen technischen Einrichtungen) an. Z. B. kann es um die richtige Positionierung von Bohrlöchern gehen.

In diesem Zusammenhang sind Bohrschablonen bekannt, die mit einer technischen Vorrichtung ausgeliefert werden und auf die für die Montage vorgesehene Fläche aufgelegt werden. Dann können die einschlägigen Positionen für die Bohrlöcher von der Schablone auf die Wand übertragen werden, etwa mit einem Bleistift. Das spart gegenüber dem individuellen Ausmessen und Positionieren der einzelnen Bohrlochstellen in jeweils zwei Richtungen in der Fläche Arbeitsaufwand und vermeidet Fehler. In vielen Fällen sind dabei unterschiedliche Vorrichtungen in einer Universalschablone zusammengefasst.

Bekannt sind natürlich außerdem Montageanleitungen in unterschiedlicher Verkörperung. Bei diesen muss allerdings die Positionierung auf der eigentlichen für die Montage vorgesehenen Fläche in einer gedanklichen Übertragungsleistung und unter Ausmessen auf der Fläche vorgenommen werden. Bekannt ist es schließlich auch, den montierten Zustand einer technischen Vorrichtung, also das Ziel des Montagevorgangs, zu visualisieren, z. B. in einem Computer. Das gilt insbesondere für komplexe Vorrichtungen.

Der vorliegenden Erfindung liegt die Aufgabe zugrunde, die Montage einer technischen Vorrichtung an einer Fläche hinsichtlich Arbeitsaufwand und Fehlerwahrscheinlichkeit weiter zu verbessern.

Gelöst wird diese Aufgabe durch ein Verfahren zum Montieren einer technischen Vorrichtung an einer Fläche mittels einer Schablone, welche Montageinformationen enthält, wobei das Verfahren die Schritte aufweist:
- Anbringen der Schablone auf der Fläche und
- Montieren der technischen Vorrichtung an der Fläche, während die Schablone daran angebracht ist,
- Abnehmen der Schablone von der Fläche nach der Montage.

Außerdem bezieht sich die Erfindung auf ein Verfahren zum Erstellen einer Schablone zum Montieren einer technischen Vorrichtung an einer Fläche, welche Vorrichtung ein System aus einer Mehrzahl zusammenwirkender Geräte und zugehörigen Leitungen ist und welche Schablone Montageinformationen enthält, wobei bei der Erstellung der Schablone die genau eine zu montierende technische Vorrichtung als Kombination zusammenwirkender Geräte und Leitungen bestimmt und die Montageinformation der Schablone auf genau diese eine zu montierende technische Vorrichtung abgestimmt werden.

Schließlich bezieht sich die Erfindung auch auf eine Montageschablone zum Montieren einer technischen Vorrichtung an einer Fläche, welche Montageschablone Montageinformationen enthält für ein System aus einer Mehrzahl zusammenwirkender Geräte und zugehörigen Leitungen.

Bevorzugte Ausgestaltungen ergeben sich aus den abhängigen Ansprüchen.

Bei dem erfindungsgemäßen Montageverfahren wird eine Montageinformationen enthaltende Schablone benutzt und auf der für die Montage vorgesehenen Fläche angebracht. Z. B. kann die Schablone mit Klebemitteln fixiert werden. Die Montageinformationen geben dem oder den Monteur(en) mindestens Positionsinformationen für vorzunehmende Arbeitsschritte der Montage. Z. B. kann das die Positionen für Montagemittel betreffen, also beispielsweise die Positionen für vorzunehmende Bohrungen, in denen danach beispielsweise mit Dübeln und Schrauben Vorrichtungsteile oder für die Befestigung vorgesehener Montagemittel wie z. B. Rohrschellen angebracht werden. Wesentlich ist, dass erfindungsgemäß die Schablone solange auf der Fläche verbleibt, wie die technische Vorrichtung montiert wird. Im Stand der Technik hat man Schablonen bereits nach dem Markieren der relevanten Positionen wieder abgenommen und für den weiteren Montageverlauf als störend empfunden.

Der Verbleib der Schablone auf der Fläche zur Montage erübrigt zunächst einmal das Übertragen von Positionen von einer Schablone auf die Fläche, wie es bei konventionellen Montageschablonen üblich war. Stattdessen ist die Position auf der Fläche bereits in Form der Schablone markiert.

Ferner erlaubt der Verbleib auch die unmittelbare Sichtbarkeit eventueller ergänzender Montageinformationen z. B. direkt neben einem anzubringenden Bohrloch. Die Erfindung bringt in diesem Sinn also Funktionen oder Teile einer Montageanleitung an die relevanten Stellen auf der Wand, jedenfalls wenn das gewünscht ist.

Außerdem erleichtert der Verbleib der Schablone eine nachträgliche Kontrolle der Montage auf Richtigkeit und Vollständigkeit. Das betrifft sowohl das konventionellerweise gegebene Risiko, dass wesentliche Informationen fälschlich nicht von der Schablone auf die Wand übertragen werden. Es betrifft aber auch den Vergleich der vorgenommenen Montageschritte mit der Schablone, also z. B. die Frage, ob ein Bohrloch tatsächlich an der richtigen Position sitzt und, bei gegebenen weiteren Informationen auf der Schablone, ob die richtigen Montageschritte vorgenommen und/oder die richtigen Montagemittel oder Vorrichtungsteile montiert worden sind.

Grundsätzlich könnte die Schablone auch darüber hinausgehende Informationen enthalten, z. B. zur Inbetriebnahme.

Allerdings wird die Schablone nach solchen Schritten, also nach der Montage und der Umsetzung auf ihr enthaltener Informationen, dann von der Wand abgenommen. Sie könnte nämlich auf die Dauer unansehnlich werden, z. B. verrotten, die Atmung oder Belüftung der von ihr bedeckten Fläche behindern oder als Montage- oder Baustellenüberbleibsel als störend empfunden werden. Sie kann z. B. einfach von der betroffenen Fläche heruntergerissen werden und entsorgt werden. In diesem Zusammenhang muss es nicht unbedingt stören, wenn Schablonenteile an Montagestellen eingeklemmt sind oder auch aus anderen Gründen, z. B. hinter montierten Geräten, nicht oder nicht vollständig entfernt werden können. In diesem Sinn können einzelne Schablonenteile auf der Fläche übrig bleiben. Weil sie vergleichsweise klein sind und/oder ohnehin durch Montagemittel, Geräte oder anderes verdeckte Flächenteile betreffen, verschlechtern solche Reste die Belüftungssituation nicht oder nicht wesentlich.

Wenn dies zur Verbesserung des Erscheinungsbildes nach dem Entfernen des wesentlichen Teils der Schablone oder zur Erleichterung dieses Vorgangs des Entfernens gewünscht ist, können Sollbruch- oder Reisslinien in der Schablone vorgesehen sein, z. B. perforierte oder verdünnte Linien.

Generell bezieht sich das erfindungsgemäße Verfahren auf das Montieren einer technischen Vorrichtung wie z. B. eines technischen Gerätes oder einer Leitung. Die Montage eines Befestigungsmittels an sich ist hier nicht gemeint, sondern die Montage des mit dem Befestigungsmittel zu befestigenden Geräts, der Leitung etc.

Die Erfindung eignet sich besonders für aus einer Mehrzahl Teile zusammengesetzte Vorrichtungen, also vor allem für die Montage eines Systems aus einer Mehrzahl zusammenwirkender Geräte und zugehörigen Leitungen. Die Leitungen können z. B. Anschlussleitungen oder Verbindungsleitungen für die / zwischen den Geräten sein und sich auf Elektrizität, Daten, Fluide und dergleichen beziehen.

Bei einem solchen System ist die Montage schon wegen der vorzunehmenden Befestigungen einzelner Vorrichtungsteile an der Fläche komplexer und die Erfindung daher von Vorteil. Insbesondere ist es von erheblichem Vorteil, wenn die Schablone die Geräte und Leitungen des Systems an ihren Positionen in ihrer Größe (bei den Geräten) und in ihrem Verlauf (bei den Leitungen) wiedergibt, sodass die Schablone gewissermaßen einen Plan für das fertige System und nicht nur für Montagepositionen enthält.

Zusätzlich oder alternativ ist es bevorzugt, dass die Geräte und Leitungen hinsichtlich ihres Typs wiedergegeben sind. Durch diese Merkmale kann der Monteur oder können eine Mehrzahl von Monteuren während der Montage die Schablone nicht nur als Referenz für vorzunehmende Arbeiten an der Fläche selbst verwenden, also z. B. für anzubringender Bohrlöcher. Die Schablone bietet auch einen Überblick und eine Anleitung für die Auswahl der jeweils richtigen Systembestandteile und ihre Anordnung. Das beschleunigt die Arbeit und verringert Fehlermöglichkeiten. Außerdem wird von dem Montagepersonal eine geringere Qualifikation bzw. werden geringere spezifische Kenntnisse hinsichtlich des zu erstellenden Systems verlangt. Stattdessen gibt die Schablone mehr oder weniger den richtigen Bauplan vor.

Vorzugsweise ist das System zusammengestellt aus Bestandteilen, nämlich Geräten, Leitungen und dergleichen, die in unterschiedlichen Kombinationen und/oder Konfigurationen eingesetzt werden können. Die Schablone bezieht sich dann vorzugsweise auf genau und nur die eine zu verwendende Kombination und Konfiguration, also nur auf das eine zu montierende System. Im Unterschied dazu haben konventionelle Schablonen jedenfalls dann, wenn eine Mehrzahl von Möglichkeiten für die zu montierende Vorrichtung besteht, regelmäßig einen Universalcharakter. Dann muss bei der Montage die richtige Alternative aus einer Mehrzahl von Alternativen ausgewählt werden, was Zeit kostet, Urteilsvermögen bedingt und Fehler ermöglicht. In diesem Sinn bezieht sich die Erfindung auch auf ein Verfahren zum Erstellen der Schablone, und zwar individuell für die zu montierende technische Vorrichtung im Sinne einer Kombination aus einer Mehrzahl Geräte und/oder Leitungen.

Auch die Wiedergabe des Gerätetyps einer zu montierenden Einzelvorrichtung auf der Schablone kann sehr vorteilhaft sein, z. B. wenn verschiedene infrage kommende Geräte gleiche oder ähnliche Montagepositionen und/oder gleiche oder ähnliche Umrisse haben und damit im Übrigen verwechselt werden könnten. Insbesondere kann eine Artikelnummer des zu montierenden einzelnen Geräts auf der Schablone wiedergegeben sein. Damit kann einfach und effizient sichergestellt werden, dass nur genau der richtige Typ montiert wird und nicht versehentlich ein sehr ähnlicher Typ. Bspw. könnten bei Produktänderungen scheinbar gleiche Ausmaße und Montagepositionen vorhanden sein, sodass etwa ein veraltetes statt dem aktuellen Produkt oder ein gerade erst herausgebrachter neuester Typ statt des auf der Schablone vermerkten Vorgängertyps montiert wird. Damit ist sichergestellt, dass nicht etwaige relevante Änderungen übersehen werden.

Ein weiterer Vorteil der Erfindung besteht darin, für eine bestimmte Kombination von Geräten und Leitungen und möglicherweise auch für ein bestimmtes verfügbares Flächenmaß oder andere Randbedingungen (etwa vorgegebene Anschlüsse für Strom, Wasser, Abgas) eine professionell günstige oder sogar optimierte Aufteilung des verfügbaren Platzes vorzugeben. Dabei geht es nicht nur um den Platzbedarf der Geräte und der Leitungen selbst, sondern auch um die Berücksichtigung von Mindestabständen dazwischen, wenn nachfolgend noch Weiteres zu montieren ist (beispielsweise Verbindungsleitungen nach der Montage der Geräte selbst). Es geht auch um die Vermeidung unnötiger Leitungslängen oder technisch ungünstiger Leitungsverläufe (z. B. Knicke in Abgasleitungen). Insoweit erlaubt eine erfindungsgemäße (insbesondere für die spezifische Kombination individualisierte) Schablone ein hohes Maß an Effizienz der Montagearbeit selbst, der Platzausnutzung, der Qualität des Ergebnisses und der Fehlervermeidung.

Bei der tatsächlichen Montage kann dabei durchaus die Freiheit bestehen, Zwischenabstände zu vergrößern. Oft kommt es vor allem auf die Einhaltung von Mindestabständen an, etwa um später noch Leitungen zwischen bereits montierte Teile setzen zu können, einen Zugang für spätere Montagearbeiten oder auch für spätere Wartungsarbeiten zu erhalten, aus Sicherheitsgründen oder aus anderen Gründen.

In diesem Sinn kann also der diesbezügliche Inhalt der Schablone als jeweilige Mindestabstandsvorgabe betrachtet werden und kann damit der Plan in diesem Sinn bei der Implementierung auch "gestreckt" werden, möglicherweise auch nur an bestimmten Stellen.

Vorzugsweise hat die Schablone in Bezug auf die Positionen auf der Fläche und auf die gegebenenfalls in ihr enthaltenen Angaben zur Größe und zum Verlauf von Vorrichtungs- und Systembestandteilen den Maßstab 1:1, also Originalgröße. Damit kann die Schablone in der bereits beschriebenen Weise an der Wand angebracht werden und während der Montage dort auch verbleiben.

Ferner ist bevorzugt, dass die Schablone bereits vor dem Anbringen an der Wand fertig ist, also die für die Montage relevanten Informationen nicht erst auf die Schablone im an die Wand angebrachten Zustand aufgetragen werden. Im Übrigen gelten die in dieser Beschreibung angegebenen optionalen Merkmale und Vorteile des Montageverfahrens sinngemäß auch für die Schablone und umgekehrt, ohne dass dazwischen im Einzelnen explizit unterschieden wird.

Die Schablone kann insbesondere ein Druckereierzeugnis sein und ist vorzugsweise nicht manuell erstellt, sondern maschinell. Vorzugsweise besteht die Schablone (auch unabhängig davon) aus festem Papier oder Pappe. Insbesondere Pappe ist sehr maßhaltig, vor allem bezüglich thermischer Maßänderungen. Wenn die Gefahr einer Beeinträchtigung durch Feuchtigkeit oder Nässe besteht, kann auch wasserresistent behandelte, insbesondere beschichtete Pappe (einschließlich festem Papier) benutzt werden, die wenigstens über die in Betracht kommenden Zeitspannen der Feuchtigkeitsexposition gebrauchsfähig bleibt. Grundsätzlich können auch Kunststoffe verwendet werden, insbesondere Polypropylen, z. B. Polypropylen-Wabenplattenmaterial oder -Stegplattenmaterial.

Wenn die Schablone bei einer größeren zu montierenden Vorrichtung, insbesondere einem komplexen System, eine erhebliche Fläche benötigt, kann sie z. B. zum Verpacken und Transportieren gefaltet (oder auch gerollt) werden.

Dementsprechend muss sie vor dem Anbringen an der Fläche ausgebreitet werden. Außerdem kann die Schablone aus einer Mehrzahl Schablonenteile aufgebaut sein, die zu einer Gesamtschablone aneinandergefügt und aneinander fixiert werden. Dabei können Klebemittel wie z. B. Haftstreifen verwendet werden, vorzugsweise aber zweidimensionale Formschlusselemente, wie man sie z. B. von Puzzleteilen kennt, gewissermaßen also Schwalbenschwanzverbindungen.

Ein bevorzugtes und wichtiges Beispiel für eine zu montierende Vorrichtung, insbesondere ein System im angegebenen Sinn, ist eine Raumklimatisierungsanlage. Damit sollen im Sinn eines generischen Begriff Heizungsanlagen, Lüftungsanlagen und "Klimaanlagen" mit Kühlfunktion bezeichnet sein. Solche Anlagen bestehen häufig aus einer Mehrzahl Geräte, z. B. Wärmetauschern, Kompressoren (in einem Betriebsmittelkreislauf eines Kühlgeräts oder einer Wärmepumpe), Ausdehnungsgefäßen für Wasserkreisläufe, Pufferspeichern für Warmwasser, ergänzenden oder alleinigen Heizgeräten wie Gas-, Öl-, Pellet- oder Hackschnitzelbrennern, Steuergeräten etc. Hinzu kommen zugehörige Anschlussleitungen, etwa zur Versorgung mit Wasser, Strom und Brennstoff, und Leitungen zwischen den Geräten für Betriebsmittel (Kältemittel), Heizwasser, sowie schließlich Leitungen zum Abführen z. B. von Verbrennungsabgasen. Die Komplexität ist an sich schon mehr oder weniger groß und erst recht ergeben sich zahlreiche Kombinationsmöglichkeiten und individuelle Anordnungsmöglichkeiten.

Bisher wurde von einer für die Montage vorgesehenen Fläche geschrieben. Vorzugsweise handelt es sich um eine Fläche eines Gebäudes (innen oder außen), also insbesondere eine Wand-, Boden- oder Deckenfläche. Dabei sind natürlich Funktionsanbauten, Keller, Garagen, Unterstände und dergleichen inbegriffen. Grundsätzlich kann die Fläche aber auch eine andere Fläche insbesondere einer großen Anlage, sein.

Neben der Angabe der Montagepositionen für Montagemittel, auf die bereits eingegangen wurde, können auch weitere Informationen zu den Montagemitteln vorteilhaft sein, insbesondere zu dem zu tragenden Gewicht oder dem Typ Montagemittel, und zwar vorzugsweise an den Montageposition. Der Hinweis zu dem Typ kann je nach individueller Fläche oder Wand auch eine gewisse Auswahl bedeuten/beinhalten, also z. B. bei einem vorgegebenen Gewicht die Auswahl zwischen unterschiedlichen Montagemitteln für Hohlraumwände, Ziegelwände, Betonwände oder Holzwände. Bei der Wiedergabe des Gewichts allein kann das der Monteur dann selbst überlegen.

Die Schablone kann ferner eine oder eine Mehrzahl Hilfslinien, vorzugsweise in horizontaler oder vertikaler Richtung, zur Ausrichtung beim Anbringen auf der Fläche aufweisen. Damit kann die Schablone dann leicht an gegebene Begrenzungslinien der Fläche angepasst und/oder mit einem Lot oder einer Wasserwaage ausgerichtet werden. Auch kann die Schablone ein ganzes Maßraster aus Hilfslinien enthalten. Selbst wenn dieses nicht ausgerichtet wird, kann es bei eventuellen zusätzlichen Installationen oder Montagearbeiten deutlich helfen, weil es gewissermaßen die Verwendung eines Zollstocks oder einer anderen Messeinrichtung erübrigen kann.

Eine weitere vorteilhafte Ausgestaltung der Erfindung betrifft die Wiedergabe von verschiedenen Informationen zum eigentlichen Montagevorgang auf der Schablone, nämlich zum zeitlichen Ablauf einzelner Montageschritte und/oder zur Arbeitsaufteilung zwischen einer Mehrzahl von Monteuren und/oder zur Zuordnung zu verschiedenen Gewerken. In diesem Sinn kann die Schablone, insbesondere in direktem räumlichen Zusammenhang mit den betroffenen Geräten oder Leitungen oder Montagepositionen, in Form von einfachen Codes Informationen im Sinn einer Arbeitsvorbereitung enthalten. Mit einfachen Codes sind Piktogramme, Farben und Zahlen gemeint, aber auch Buchstaben, und zwar vorzugsweise abstrakte Symbole, die keine Kenntnis einer bestimmten Sprache voraussetzen. Das erleichtert nicht nur eine internationale Verwendung ein desselben Schablonentyps, sondern auch die Beschäftigung von Monteuren mit unzureichenden Kenntnissen der Landessprache oder mit unzureichenden Kenntnissen von Schriftsprache an sich.

Z. B. könnten in diesem Sinn verschiedene Gewerke verschiedenen Farben zugeordnet sein, also etwa alle Arbeiten des Elektrikers oder seiner Hilfspersonen in rot und alle Arbeiten des Heizungsinstallateur oder seiner Hilfspersonen in blau usw. und z. B. alle allgemeinen Informationen für alle Gewerke in schwarz. Natürlich könnte man den Gewerken auch Zahlen oder Buchstaben zuordnen.

In gleicher Weise (alternativ oder zusätzlich) kann (für jede Person, jedes Gewerk oder auch insgesamt) eine Reihenfolge vorgegeben oder vorgeschlagen werden, beispielsweise durch eine einfache Nummerierung oder die Reihenfolge der Buchstaben des Alphabets oder eine Kombination daraus (A1 für den ersten Schritt des Elektrikers und B1 für den ersten Schritt des Heizungsinstallateur usw.). Hier lassen sich natürlich verschiedenste praktische Lösungen finden, die jeweils der Komplexität der sich stellenden Aufgabe gerecht werden und dabei aber doch einfach bleiben sollen.

Der entscheidende Gedanke ist, dass bei der Erzeugung der Schablone bereits eine optimierte oder jedenfalls professionell gute Arbeitsvorbereitung im Sinn solcher organisatorischen Vorgaben getroffen wird. Damit wird hinsichtlich dieser Organisationsvorgaben ein höheres professionelles Niveau erreicht als dies möglicherweise von dem tatsächlich eingesetzten Personal erreichbar wäre. In gleicher Weise kann man auch argumentieren, dass die aufzuwendende Zeit des tatsächlich ausreichend qualifizierten Personals begrenzt oder solches Personal ganz eingespart werden kann, indem nur sichergestellt wird, dass Vorgaben auf der Schablone richtig und vollständig umgesetzt werden.

In diesem Sinn erlaubt dieser Aspekt der Erfindung außerdem eine gewisse Zuordnung zu Personen oder Firmen, indem nämlich auch nachträglich klar ist, wer (welches Gewerk, welche Firma, welcher Monteur) für bestimmte Arbeiten zuständig war und insoweit für Unterlassungen oder Fehlleistungen verantwortlich ist.

Im Übrigen kann die Montageschablone auch schon vor der eigentlichen Montagearbeit benutzt werden, z. B. zu einer kurzen Besprechung mit auf dem Boden ausgebreiteter Schablone oder auch zu Schulungszwecken in einem Schulungsraum. Dann kann eine inhaltsgleiche andere Schablone oder auch dieselbe für die eigentliche Montage benutzt werden. Außerdem können mithilfe der Schablone Kunden mit einer Art Vorschau bedient werden und kann mit einer solchen Schablone auch schon der Materialbedarf ermittelt werden.

In diesem Zusammenhang kann das erfindungsgemäße Verfahren auch vorsehen, dass es eine elektronische Version der Schablone gibt, die zu den angegebenen Zwecken eingesetzt wird, also z. B. dem Kunden zur Vorschau übermittelt wird.

Im Folgenden wird die Erfindung anhand eines Ausführungsbeispiels erläutert, wobei auch dabei nicht streng zwischen verschiedenen Kategorien unterschieden wird. Die einzelnen Merkmale können im Übrigen auch in anderen Kombinationen erfindungswesentlich sein.

Im Einzelnen zeigt
- Figur 1: eine erfindungsgemäße Montageschablone im Zustand des aus einer Mehrzahl Schablonenteile Zusammengesetztwerdens und
- Figur 2: eine Kellerwand mit daran angebrachter Montageschablone und teilweise darauf montierten Geräten und Leitungen.

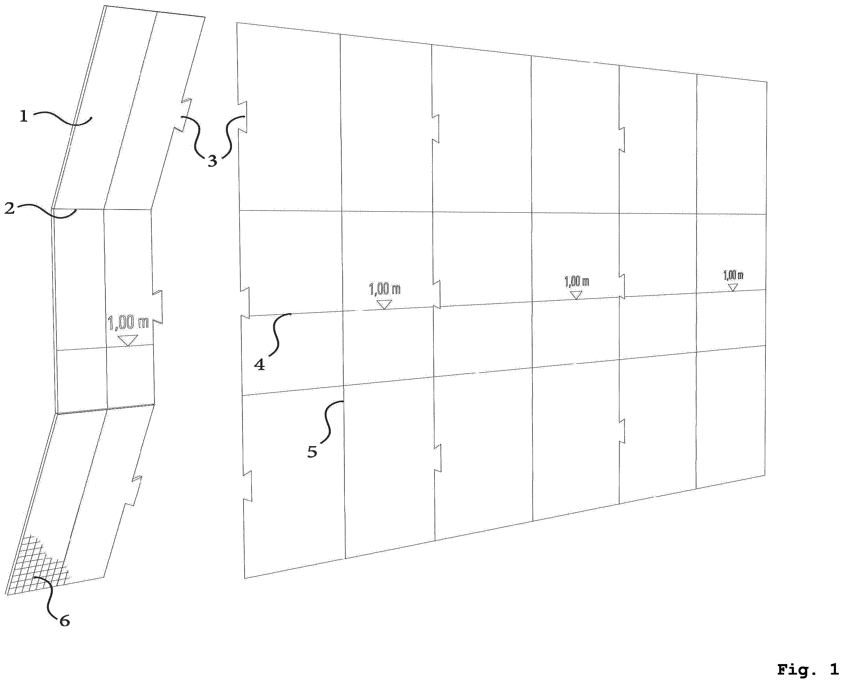

**Figur 1** zeigt in perspektivischer Darstellung eine Montageschablone 1, die ersichtlich aus vier Schablonenteilen besteht, wobei drei in der Figur rechte Schablonenteile bereits aneinandergefügt sind und das letzte linke Schablonenteil (Bezugszeichen 1) noch davon separat dargestellt ist. Zum Aneinanderfügen dienen schwalbenschwanzähnliche formschlüssige Verbindungsmittel 3, nämlich ein entsprechender Vorsprung des linken Schablonenteils und eine entsprechende Ausnehmung des rechten Nachbarn, wobei die kurzen Seitenkanten des Vorsprungs und der Ausnehmung Hinterschnitte aufweisen und die lange Längskante parallel zu der Trennlinie zwischen den Schablonenteilen verläuft. Die Geometrie entspricht abgesehen von der Flachheit des Materials einer Schwalbenschwanzverbindung.

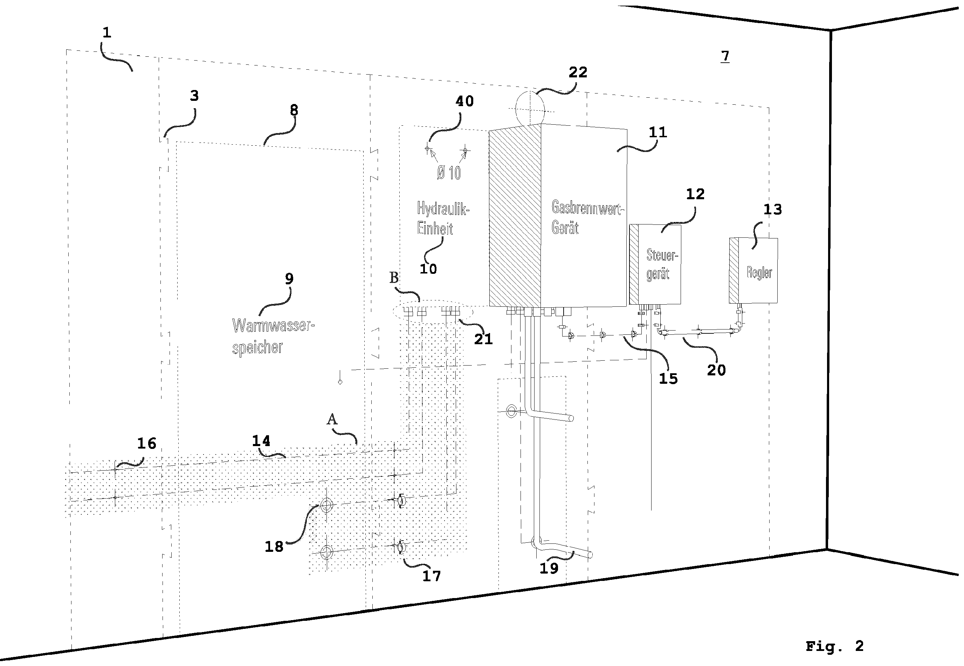

Die übrigen Schablonenteile sind in gleicher Weise bereits aneinandergefügt dargestellt. In dieser Form kann eine relativ große Schablone, die z. B. gemäß Figur 2 einen wesentlichen Teil einer Kellerwand bedecken kann, aus Einheiten mit überschaubarer Größe aufgebaut sein, etwa 210 cm Höhe und zwischen 60 und 100 cm Breite pro Schablonenteil (wobei das linke Schablonenteil bei diesem Beispiel schmaler als die übrigen ist, also z. B. 60 cm statt 100cm breit).

Figur 1 zeigt außerdem den linken Schablonenteil noch leicht entlang zweier horizontaler Faltenlinien 2 geknickt. Dies soll darstellen, dass die Schablonenteile in einem zusammengefalteten und damit auf etwa 1/3 der erwähnten Höhe verkürzten Zustand gelagert und geliefert werden und vor dem Zusammenfügen aus diesem Zustand auseinandergefaltet werden. Das Packmaß liegt also bei diesem Beispiel etwa bei praxistauglichen 60-100cmx70cm.

Es handelt sich im vorliegenden Fall um ein bedrucktes Plattenmaterial, nämlich aus mehrlagiger Papierplatte, konkret das Material mit dem Handelsnamen DISPA des Herstellers 3A Composites mit einer Stärke von 2,4 mm in der 3-lagigen Ausführung. Die mittlere Lage besteht aus geprägtem Recyclingpapier, die Außenlagen aus glattem Papier, wobei der Verbund insgesamt vollständig recyclingfähig ist. Die Auslagen sind mit einer dünnen Lackschicht versehen, um die Feuchtigkeitsresistenz zu erhöhen. Hier könnten auch Beschichtungen aus Öl- oder Wachsmaterialien mit z. B. pflanzlichem Ursprung eingesetzt werden.

Jedenfalls ist das Material besonders günstig für das Bedrucken, sodass die im Folgenden beschriebenen aufgedruckten Informationen über an sich bekannte und dem Format angepasste Druckmaschinen aufzubringen sind.

Grundsätzlich käme z. B. auch eine Wabenstruktur-Polypropylenplatte in Betracht, z. B. eine Platte mit dem Handelsnamen Akylite des Herstellers CORPLEX in einer Stärke von z. B. 2,5 mm. Auch dieses Material kann gut bedruckt werden (Siebdruck) und lässt sich entsprechend falten. Es ist vollständig recycelbar. Die Feuchtigkeitsresistenz ist schon an sich gegeben.

Figur 1 zeigt außerdem eine in 100 cm Höhe über der Unterkante verlaufende horizontale Hilfslinie 4 zur Orientierung und vertikale Hilfslinien 5, die hier nur symbolisch dargestellt sind. Zusätzlich zu einem solchen (oder abgewandelten) groben Raster kann, wie mit dem Bezugszeichen 6 links unten dargestellt, auch ein feineres Raster mit z. B. kleinster Längeneinheit von 5 mm aufgedruckt sein, das für die meisten Zwecke die Verwendung eines Zollstocks oder einer anderen Messeinrichtung überflüssig macht.

**Figur 2** zeigt eine weitgehend Figur 1 entsprechende Montageschablone 1. Diese Schablone 1 ist an einer symbolisch dargestellten Kellerwand 7 (rechts in der Figur eine Ecke zu einer angrenzenden Wand) montiert, z. B. über rückseitige Selbstklebeflächen angeklebt. Dabei ist die Schablone 1 bei ihrer Anbringung einerseits auf dem Boden aufgestellt, wie gezeichnet, dabei aber andererseits hinsichtlich der Hilfslinien im Lot oder in der Waage ausgerichtet, etwa mit einer Wasserwaage oder besser noch einem Raumlaser. Dementsprechend können die anhand Figur 1 erläuterten Hilfslinien oder ein Raster als lotgerechte oder waagerechte Referenz benutzt werden und beziehen sich in ihrer Höhe auf den Boden.

Figur 2 zeigt in kurz gestrichelten Linien, etwa beim Bezugszeichen 8, die Außenumrisse zu montierender Geräte, im Fall des Rechtecks 8 die eines darin so bezeichneten Warmwasserspeichers 9. Tatsächlich kann die mit 9 bezeichnete Beschriftung statt dem Wort "Warmwasserspeicher" oder zusätzlich den konkreten Typ mit Herstellerangaben und vorteilhafterweise sogar Artikelnummer wiedergeben, was hier der Übersichtlichkeit halber nicht dargestellt ist. Analog gilt das für die rechts daneben dargestellte Hydraulikeinheit mit einer entsprechenden gestrichelten Umrisslinie.

Zu dieser Hydraulikeinheit sind im oberen Bereich beim Bezugszeichen 10 zwei Bohrlochpositionen eingezeichnet und mindestens mit dem entsprechenden Bohrlochdurchmesser 10 mm bezeichnet. Hier könnte alternativ oder zusätzlich zum Durchmesser auch das Gewicht der zu montierenden Hydraulikeinheit angegeben sein. Im Fall des Warmwasserspeichers ist übrigens keine Montageposition für Montagemittel bezeichnet, weil dieser auf dem Boden aufsteht.

Rechts neben der Hydraulikeinheit ist ein bereits montiertes Gasbrennwertgerät 11 eingezeichnet, daneben ein ebenfalls montiertes Steuergerät 12 und rechts daneben ein montierter Regler 13. Von diesen montierten Geräten 11-13 verdeckt sind entsprechende Umrisslinien und Beschriftungen wie in Zusammenhang mit den Bezugszeichen 8-10 erläutert. Figur 2 zeigt, dass die Geräte 11-13 (und weitere) auf der Schablone 1 montiert werden, während diese noch an der Wand hängt.

Die gestrichelten Linien mit den Umrissen der zu montierenden Geräte können perforiert sein, weil z. B. hinter den drei dargestellten Geräten 11-13 Teile der Montageschablone 1 eingeklemmt und/oder sehr schlecht zugänglich sind. Dementsprechend kann es mühsam oder unmöglich sein, die entsprechenden Bereiche der Montageschablone 1 hier nach der Fertigstellung der Montage zu entfernen und insoweit können perforierte Linien als Risslinien diese Arbeit erleichtern.

Die beispielhaft mit 14 und 15 bezeichneten strichpunktierten Linien bezeichnen Position und Verlauf zu montierender Leitungen, im Fall des Bezugszeichens 14 im linken unteren Viertel der Schablone 1 Rohrleitungen und im Fall der strichpunktierten Linien 15 zwischen dem Gasbrennwertgerät 11 und dem Steuergerät 12 sowie der strichpunktierten Linien darunter Elektroleitungen. Ganz rechts auf der Schablone 1 ist mit 20 eine bereits montierte Elektroleitung zwischen dem Steuergerät 12 und dem Regler 13 gezeichnet, unter der noch die Positionsbezeichnungen für die Montageelemente erkennbar sind. Bei der Linie 15 für die zu montierende Elektroleitung links daneben sind bereits die Befestigungselemente für die Elektroleitung montiert, aber die Leitung selbst noch nicht. Zwischen den beiden Leitungstypen kann bei einer realen Ausführung z. B. durch hier nicht wiedergegebene Farbcodes oder andere Codes unterschieden werden.

Links unten auf der Schablone 1 finden sich Positionsbezeichnungen 16 für zu montierende Rohr-Halterungen und etwas weiter rechts unten sind solche Rohr-Halterungen 17, nämlich Rohrschellen, bereits montiert auf entsprechenden Positionsbezeichnungen. Links von den Rohrschellen 17 führen die entsprechenden strichpunktierten Linien zu Doppelkreissymbolen 18. Wie weiter rechts (unter dem Gasbrennwertgerät 11 ganz unten) zu sehen ist, bezeichnen solche Doppelkreissymbol 18 Stellen, an denen die Rohrleitungen in eine von der Wand 7 wegführende Richtung umgebogen sind oder werden sollen, um dort ein Standgerät anzuschließen. Z. B. kann an die mit 19 bezeichnete Leitung und die darüber ein Warmwasserpufferspeicher angeschlossen werden.

Schließlich bezeichnet das Bezugszeichen 21 unter der Hydraulikeinheit Symbolabbildungen von Anschlusspunkten eines Geräts, hier der Hydraulikeinheit. Rechts daneben unter dem Gasbrennwertgerät 11 ist zu erkennen, dass an den entsprechend bezeichneten Stellen tatsächlich Anschlusspunkte aus dem Gasbrennwertgerät 11 nach unten herausführen und zum Teil mit einer Rohrleitung belegt sind. Über dem Gasbrennwertgerät 11 wiederum sieht man bei dem Bezugszeichen 22 einen angezeichneten Durchbruch durch die Wand 7 für ein Abgasrohr des Gasbrennwertgeräts.

In Figur 2 erkennt man ferner zwei mit A und B bezeichnete Bereiche. Diese sollen farbige Hinterlegungen und/oder farbige Ausführungen der in ihnen vorgesehenen Symbole und Linien bezeichnen. Insbesondere kann ein solcher Farbcode im Bereich A bedeuten, dass hier Rohrleitungen durch weniger qualifiziertes Personal angebracht werden sollen, wohingegen die Farbcodierung im Bereich B symbolisiert, dass hier Anschlüsse bzw. Verbindungen durch qualifizierteres Fachpersonal zu erstellen sind. Das gilt natürlich grundsätzlich auch für andere Teile in Figur 2. Außerdem könnten solche Farbcodes auch eine Aufteilung auf verschiedene Gewerke bezeichnen, bspw. die Arbeiten eines Heizungs- und/oder Sanitärinstallateurs trennen von denen eines Elektrikers. Auch können die Farbcodes Reihenfolgen von Arbeitsschritten bezeichnen. Ferner könnte auch eine Zuordnung zu einzelnen Montagepersonen in einer Gruppe erfolgen, so dass das parallele Arbeiten erleichtert bzw. optimiert wird. Schließlich können in einer hier der Übersichtlichkeit halber nicht dargestellten Weise natürlich auch Piktogramme oder Zahlen- und Buchstabencodes für solche Zwecke benutzt werden, wie weiter oben schon näher ausgeführt. Natürlich kann die Montageschablone 1 auch eine Legende für solche Codes enthalten, z. B. im Randbereich.

Insgesamt zeigen die Figuren 1 und 2, wie aus einer mehrteiligen und zusammengefalteten Papierschablone 1, die z. B. als Paketstapel angeliefert werden kann, durch Auseinanderfalten, Zusammenfügen und Ankleben ein originalgroßer Bauplan auf der Kellerwand 7 mit präzisen und übersichtlichen Darstellungen von Geräteumrissen, Montagepositionen und weiteren Montageinformationen entsteht, wobei, wie weiter oben bereits erläutert, zahlreiche weitere Kodierungen an den entsprechenden Stellen vorgesehen sein können und hier im Rahmen einer einfachen Patentzeichnung nicht wiedergegeben werden können.

Figur 2 zeigt den Fortschritt der Montage, während der die Schablone 1 an der Wand 7 verbleibt. Nach vollständiger Montage wird die Schablone 1 von der Wand abgenommen, z. B. einfach heruntergerissen. Dabei können, wie ebenfalls bereits erwähnt, einzelne Teile dort, wo sie schlecht entfernt werden können bzw. nicht stören, an der Wand verbleiben, z. B. hinter den montierten Geräten 11-13.

Während der Montage dient die Schablone zur vollständigen, auch für nicht besonders qualifiziertes Personal verständlichen und, gerade in dieser Hinsicht, verwechslungssicheren und eindeutigen Arbeitsvorbereitung und Begleitung des ganzen Montageprozesses einschließlich der richtigen Auswahl der an den einzelnen Stellen zu montierenden Elemente (Geräte, Befestigungsmittel, Leitungen). Nach Abschluss der Montage erlaubt die Schablone 1 darüber hinaus eine Kontrolle auf Vollständigkeit und Richtigkeit. Selbst wenn im Einzelfall z. B. noch zusätzliche Schritte gewünscht sein sollten, ist dies mithilfe der in Figur 1 dargestellten Hilfslinien und Raster 4-6 in sehr einfacher Weise und schnell möglich.

Auf der anderen Seite ist die hier dargestellte Montageschablone 1 spezifisch für die vorgenommene Anlage bzw. Geräte- und Leitungskombination. Es handelt sich also nicht um eine Universalschablone mit einer Mehrzahl dargestellter Varianten, von denen nur eine wahlweise zu realisieren ist. Stattdessen wird die Schablone (im Prinzip auch händisch und klassisch, vorzugsweise aber per EDV und Software) nach Zusammenstellung der entsprechenden Geräte und im Hinblick auf Platzbedarf, Montageablauf und Wartungszugangsmöglichkeiten optimiert erstellt. Es wird also vor der Realmontage bereits ermittelt und fixiert, was wie zu montieren ist. Mit der entsprechenden elektronischen Schablone kann dies auch vorab visualisiert und diskutiert werden, z. B. mit dem Kunden. Natürlich können auch Schulungen in dieser Form oder mit einer real ausgedruckten Schablone durchgeführt werden. Jedenfalls wird eine für die spezifische Anlage passende Schablone, die wie gesagt auch auf die Gegebenheiten auf der Baustelle, hier der Wand 7, Rücksicht nimmt, produziert und zum Montageort geliefert und in der angesprochenen Weise verwendet.

Wahlweise kann dies auf einen Einzelfall individuell reagierend erfolgen. Es ist aber auch möglich, einen Vorrat, gewissermaßen eine Bibliothek, mit dem Angebot an kombinationsfähigen Geräten erstellbarer Lösungen anzulegen, die auf unterschiedliche Raumverhältnisse hin optimiert sind, und dann daraus die beste Lösung auszuwählen und entweder aus einem Lager bestehender Schablonen zu entnehmen oder in diesem Fall dann auszudrucken.

Im vorliegenden Fall geht es ersichtlich um eine Gebäudeheizungsanlage. Es sind aber natürlich auch andere komplexe technische Vorrichtungen möglich, wie bereits diskutiert. Diese müssen nicht zwingend an einer vertikalen Gebäudewand angebracht sein. Bspw. könnte eine Klimaanlage (mit Kühlfunktion) oder eine Lüftungsanlage, etwa für die Gastronomie, an einer Raumdecke angebracht werden. Als weiteres Beispiel könnten im Außenbereich in einem hierfür vorgesehenen Schuppen oder Gerätekasten eine Heizungs- oder Klimaanlage aufgebaut werden. Dabei kann es z. B. mit Rücksicht auf wenig für die Montage geeignete Wände sinnvoll sein, die Anlage ganz oder teilweise auf dem Boden aufzubauen und dementsprechend auch eine erfindungsgemäße Schablone auf dem Boden einzusetzen.

## Patentansprüche

1. Verfahren zum Montieren einer technischen Vorrichtung (10-13, 19, 20) an einer Fläche (7) mittels einer Schablone (1), welche Montageinformationen enthält, wobei das Verfahren die Schritte aufweist:
- Anbringen der Schablone (1) auf der Fläche (7) und
- Montieren der technischen Vorrichtung (10-13, 19, 20) an der Fläche, während die Schablone (1) daran angebracht ist,
- Abnehmen der Schablone (1) von der Fläche (7) nach der Montage, **dadurch gekennzeichnet, dass** die technische Vorrichtung (10-13, 19, 20) ein System aus einer Mehrzahl zusammenwirkender Geräte (10-13) und zugehörigen Leitungen (19, 20) dazwischen ist.

2. Verfahren zum Erstellen einer Schablone (1) zum Montieren einer technischen Vorrichtung (10-13, 19, 20) an einer Fläche (7), welche Vorrichtung (10-13, 19, 20) ein System aus einer Mehrzahl zusammenwirkender Geräte (10-13) und zugehörigen Leitungen (19, 20) dazwischen ist und welche Schablone (1) Montageinformationen enthält, wobei bei der Erstellung der Schablone (1) die genau eine zu montierende technische Vorrichtung (10-13, 19, 20) als Kombination zusammenwirkender Geräte (10-13) und Leitungen (19, 20) bestimmt und die Montageinformation der Schablone (1) auf genau diese eine zu montierende technische Vorrichtung (10-13, 19, 20) abgestimmt werden, wobei vorzugsweise das Verfahren die Montage nach Anspruch 1 beinhaltet.

3. Verfahren nach einem der vorstehenden Ansprüche, bei dem die technische Vorrichtung (10-13, 19, 20) eine Raumklimatisierungsanlage, insbesondere eine Heizungsanlage, ist.

4. Verfahren nach einem der vorstehenden Ansprüche, bei dem die Schablone (1) aus einer Mehrzahl Schablonenteile durch Aneinanderfügen erzeugt wird, insbesondere mit einer zweidimensional-formschlüssigen Verbindung (3) dazwischen.

5. Verfahren nach einem der vorstehenden Ansprüche, bei dem die technische Vorrichtung (10-13, 19, 20), insbesondere die Geräte (10-13) und die Leitungen, an ihrer/ihren Position(en) in ihrer Größe bzw. ihrem Verlauf wiedergegeben sind.

6. Verfahren nach einem der vorstehenden Ansprüche, bei dem Montagepositionen (16, 18, 40) für Montagemittel (17) zur Montage der technischen Vorrichtung (10-13, 19, 20) auf der Schablone (1) wiedergegeben sind.

7. Verfahren nach einem der vorstehenden Ansprüche, bei dem auf der Schablone (1) mindestens eine horizontale (4) oder vertikale (5) Hilfslinie zur Ausrichtung der Schablone (1) bei dem Anbringen dann damit ausgerichtet wird und/oder auf der Schablone (1) ein Maßraster (6) aus Hilfslinien wiedergegeben ist.

8. Verfahren nach einem der vorstehenden Ansprüche, bei dem die Schablone (1) oder eine elektronische Repräsentation der Schablone (1) vor der Montage zur Schulung/Einweisung, als Vorschau für einen Kunden oder zur Vorbesprechung der Montage verwendet wird.

9. Montageschablone (1) zum Montieren einer technischen Vorrichtung (10-13, 19, 20) an einer Fläche, welche Montageschablone (1) Montageinformationen enthält für ein System aus einer Mehrzahl zusammenwirkender Geräte (10-13) und zugehörigen Leitungen (19, 20) dazwischen.

10. Schablone (1) nach Anspruch 9, bei der die Geräte (10-13) und die Leitungen (19, 20) an ihren Positionen in ihrer Größe bzw. ihrem Verlauf wiedergegeben sind.

11. Schablone (1) nach Anspruch 9 oder 10, bei der Montagepositionen (16, 18, 40) für Montagemittel (17) zur Montage der technischen Vorrichtung (10-13, 19, 20) auf der Schablone (1) wiedergegeben sind.

12. Schablone (1) nach einem der Ansprüche 9 bis 11, bei der mindestens eine horizontale (4) oder vertikale (5) Hilfslinie zur Ausrichtung der Schablone (1) wiedergegeben ist und/oder auf der Schablone (1) ein Maßraster (6) aus Hilfslinien wiedergegeben ist.

13. Schablone (1) nach einem der Ansprüche 9 bis 12 aus einer Mehrzahl Schablonenteile, die zweidimensional-formschlüssige Verbindungsmittel (3) aufweisen und dadurch aneinandergefügt und aneinander fixiert werden können.

14. Schablone (1) nach einem der Ansprüche 9 bis 13, bei der die technische Vorrichtung (10-13, 19, 20) eine Raumklimatisierungsanlage, insbesondere eine Heizungsanlage, ist.

15. Schablone (1) nach einem der Ansprüche 9 bis 14, die aus vorzugsweise wasserresistent behandelter Pappe oder Polypropylen besteht.
